# EUROPEAN PATENT APPLICATION

(11) **EP 4 723 510 A1**
(43) Date of publication of application: **08.04.2026**
(21) Application number: 24830162.4
(22) Date of filing: 07.05.2024
(51) Int. Cl.: H04B 10/25, H04B 10/2507

(54) **METHOD, SYSTEM, AND RELATED DEVICE**

(30) Priority: 26.06.2023 CN 202310762994
(71) Applicant: Huawei Technologies Co., Ltd., Shenzhen, Guangdong 518129 (CN)
(72) Inventor: WANG, Fujiang, Shenzhen, Guangdong 518129 (CN); DING, Zhongkui, Shenzhen, Guangdong 518129 (CN)
(74) Representative: Thun, Clemens
(86) International application number: PCT/CN2024/091396
(87) International publication number: WO 2025/001514

(57) **Abstract**

This application discloses a method, a system, and a related device. A controller may determine a first optical channel between an optical transmitting device and an optical receiving device in a first slot based on a data transmission request, and then send configuration information to the optical transmitting device, to indicate the optical transmitting device to send first data to the optical receiving device in the first slot based on a phase compensation coefficient of the first optical channel, so as to compensate for a phase error caused by the first optical channel, thereby improving data recovery accuracy of the optical receiving device, and reducing a bit error rate.

## Description

This application claims priority to Chinese Patent Application No. 202310762994.X, filed with the China National Intellectual Property Administration on June 26, 2023 and entitled "METHOD, SYSTEM, AND RELATED DEVICE", which is incorporated herein by reference in its entirety.

### TECHNICAL FIELD

This application relates to the field of optical communication technologies, and in particular, to a method, a system, and a related device.

### BACKGROUND

An optical network is usually a point-to-multipoint or multipoint-to-multipoint communication system. An optical receiving device may receive optical signals from different optical transmitting devices in different slots. Usually, there is a relatively large phase difference between different optical signals, and there is a relatively large difference (referred to as a phase error) between phases of some optical signals and a phase of a sampling clock signal of the optical receiving device. This reduces data recovery accuracy of the optical receiving device, and increases a bit error rate of optical communication.

To reduce a bit error rate, before occupying a slot to send data (or referred to as a payload) to an optical receiving device, an optical transmitting device needs to occupy the slot to additionally send a preamble to the optical receiving device. The preamble is data pre-learned by the optical receiving device. The optical receiving device detects a phase error by receiving the preamble. Consequently, a clock recovery delay is relatively long, preamble overheads are relatively large, and data transmission efficiency of optical communication is reduced.

### SUMMARY

This application provides a method, a system, and a related device, to reduce a clock recovery delay and improve data transmission efficiency in an optical communication process.

According to a first aspect, this application provides a method. The method may be applied to a system, the system may be an optical network, and the system may include a plurality of optical communication devices, an optical interconnection network, and a controller. An optical communication device that has at least a function of sending an optical signal in the plurality of optical communication devices or an optical module (or an optical interface) in the optical communication device is referred to as an optical transmitting device, and an optical communication device that has at least a function of receiving an optical signal in the plurality of optical communication devices or an optical module in the optical communication device is referred to as an optical receiving device. The optical interconnection network is configured to provide an optical channel (or referred to as an optical link or an optical path) between different optical communication devices. The optical channel is used to transmit an optical signal. For example, the optical channel includes or passes through one or more optical fibers. In this application, an optical channel that is in the optical interconnection network and that is used to transmit, to the optical receiving device in a first slot, an optical signal sent by the optical transmitting device is referred to as a first optical channel.

The system may transmit data in a TDMA manner. After the system allocates a slot for data or data transmission, the optical transmitting device sends the data in the slot, the optical interconnection network provides an optical channel between the optical transmitting device and the optical receiving device in the slot, and the optical receiving device receives the data in the slot. A same optical receiving device may receive data from different optical transmitting devices in a time division manner.

When the optical transmitting device has a requirement for sending data (referred to as first data) to an optical receiving device in a slot (referred to as a first slot), the optical transmitting device may send the data transmission request to the controller. The data transmission request indicates that the optical transmitting device has the requirement for sending the first data to the optical receiving device in the first slot. Correspondingly, the controller may receive the data transmission request.

For different optical channels, phases of input optical signals, distances of optical links, channel conditions, and the like usually differ greatly. Therefore, in a process of transmitting an optical signal from the optical transmitting device to the optical receiving device, different optical channels cause phase distortion (or phase errors) at different degrees on the optical signal. A phase compensation coefficient may be configured in the optical transmitting device to compensate for the phase error in the optical signal. The controller may determine a first optical channel between the optical transmitting device and the optical receiving device in the first slot based on the data transmission request, and then send configuration information to the optical transmitting device, to indicate the optical transmitting device to send the first data in the first slot based on a first phase compensation coefficient of the first optical channel, so as to compensate for phase distortion or a phase error caused by the first optical channel on an optical signal. Correspondingly, the optical transmitting device may receive the configuration information, carry the first data on an optical signal (referred to as a first optical signal) in the first slot based on the first phase compensation coefficient according to an indication of the configuration information, and then input the first optical signal on which phase compensation is performed into the first optical channel. This helps reduce a phase error existing when the first optical signal reaches the optical receiving device. The optical receiving device performs data recovery on the first optical signal that is output by the first optical channel. This helps improve accuracy of data recovery performed by the optical receiving device on the first optical signal and reduce a bit error rate.

The optical receiving device may not need to configure the phase compensation coefficient in the first slot by receiving a preamble. This helps reduce a link establishment delay of the optical receiving device, and improve data transmission efficiency of optical communication. Even if the optical receiving device still configures the phase compensation coefficient by receiving the preamble, because the first optical signal compensated by a transmitting end reaches, after being transmitted through the first optical channel, the optical receiving device at a signal phase required by the optical receiving device or at a phase close to a signal phase required by the optical receiving device, this helps reduce a delay in configuring the phase compensation coefficient by the optical receiving device, reduce overheads of the preamble, and improve data transmission efficiency of optical communication.

In addition, the optical transmitting device may determine, before actually sending the first optical signal, a requirement for sending the first optical signal to the optical receiving device. Therefore, this helps the optical transmitting device send the data transmission request to the controller before the first slot. When another impact factor is not considered, phase errors caused by a same optical channel on an optical signal in different slots are the same, that is, phase compensation coefficients required for an optical signal transmitted to the optical receiving device through a same optical channel in different slots are the same. Therefore, this helps the controller obtain the first phase compensation coefficient of the first optical channel before the first slot. The controller configures, based on the data transmission request and the first phase compensation coefficient of the first optical channel, the optical transmitting device to send the first optical signal, instead of configuring, by detecting a phase of the first optical signal, the optical receiving device to receive the first optical signal. This helps the optical transmitting device quickly complete configuration of the phase compensation coefficient when the first slot arrives, thereby reducing a clock recovery delay, and improving data transmission efficiency of optical communication.

Optionally, the controller may determine an identifier of the first optical channel based on the data transmission request, and then determine the first phase compensation coefficient based on the identifier of the first optical channel. Correspondingly, the configuration information may include the first phase compensation coefficient.

Optionally, after determining the identifier of the first optical channel, the controller may carry the identifier of the first optical channel on the configuration information. After receiving the configuration information, the optical transmitting device may determine the first phase compensation coefficient based on the identifier of the first optical channel. Correspondingly, the configuration information may not include the first phase compensation coefficient. This helps reduce a length of control information, and save transmission resources of a control channel.

For ease of description, in this application, an apparatus configured to determine the first phase compensation coefficient based on the identifier of the first optical channel is referred to as a determining apparatus, and the determining apparatus may be the controller, the optical transmitting device, or another device.

Optionally, the determining apparatus may obtain phase compensation information, where the phase compensation information indicates a correspondence between an identifier of an optical channel in the optical interconnection network and a phase compensation coefficient. After determining the identifier of the first optical channel, the determining apparatus may obtain, from the phase compensation information, a phase compensation coefficient (that is, the first phase compensation coefficient) corresponding to the identifier of the first optical channel.

A manner in which the phase compensation information indicates the correspondence is not limited in this application. For example, the phase compensation information may be a machine learning model or include one or more key-value pairs.

A location for storing the phase compensation information is not limited in this application. For example, the phase compensation information may be stored in the determining apparatus, or stored in an apparatus other than the determining apparatus.

A manner of determining the phase compensation information is not limited in this application.

For example, the determining apparatus or another apparatus may determine a correspondence between an identifier of an optical channel and a phase compensation coefficient based on parameter information of the optical channel, for example, may determine a correspondence between the identifier of the first optical channel and the first phase compensation coefficient based on parameter information of the first optical channel. The parameter information of the optical channel includes but is not limited to a phase of an optical signal that is input into the optical channel, a length of an optical fiber that the optical channel passes through, and/or a channel condition (for example, an attenuation status of a signal phase in a unit length). The parameter information of the optical channel may be used to measure a phase error caused by the optical channel.

For example, the determining apparatus or another apparatus may determine the phase compensation information based on a phase measurement result of an optical signal that is output by the optical channel in the optical interconnection network in a second slot, and the second slot includes one or more slots before the first slot. For example, the determining apparatus or another apparatus may determine the correspondence between the identifier of the first optical channel and the first phase compensation coefficient based on a phase measurement result of an optical signal that is output by the first optical channel in the second slot.

In this application, a phase measurement result of a signal received by the optical receiving device may indicate an absolute value of a phase of the received signal or a phase relative value relative to a target signal. The target signal may be a reference clock signal (or referred to as a line clock signal or a local clock signal) in the system. In the following, an example in which the target signal is a reference clock is used, and a phase error of a signal is referred to as a phase of the signal for short. Correspondingly, it may be considered that a phase of the target signal is 0. That is, a phase of a historical optical signal may be used to measure a phase error caused by the first optical channel on a second optical signal, and therefore may be used to determine the correspondence between the identifier of the first optical channel and the first phase compensation coefficient.

The first phase compensation coefficient may indicate a phase value (referred to as a first phase value) of a sent signal. The phase value may be an absolute value or a relative value of a phase of the sent signal, or indicate a variation of the phase of the sent signal relative to a phase of an originally sent signal. The first phase value indicated by the first phase compensation coefficient is used to compensate for a phase error caused by the first optical channel on an optical signal. For example, the phase of the originally sent signal is the same as a phase of the reference clock signal, the first phase value indicates the relative value of the phase of the sent signal, and a phase measurement result (referred to as a first phase measurement result) of an optical signal that is output by the first optical channel in the second slot indicates a relative value of a phase of a received signal. The first phase value may be an absolute value or an approximate value of a difference between 1 UI and the first phase measurement result.

For example, after obtaining a phase measurement result (referred to as a first phase measurement result) of an optical signal that is output by the first optical channel in the second slot, the determining apparatus or another apparatus may use a phase compensation coefficient (that is, the first phase compensation coefficient) in a plurality of phase compensation coefficients that matches the first phase measurement result as the phase compensation coefficient corresponding to the identifier of the first optical channel. For example, the first phase compensation coefficient may be a phase compensation coefficient in the plurality of phase compensation coefficients that is closest to the difference between 1 UI and the first phase measurement result.

The optical interconnection network may provide a plurality of optical channels in a time division manner or at the same time, and the identifier of the first optical channel may be used to determine the first optical channel from the plurality of optical channels in the optical interconnection network. Optionally, at least two optical channels in the plurality of optical channels are separately used to transmit, to the optical receiving device, the optical signal sent by the optical transmitting device. For example, information about the first optical channel may include address information of at least one optical switching device that is included in the first optical channel or through which the first optical channel passes.

It is assumed that at least two optical channels include the first optical channel and a second optical channel, the second optical channel is also used to transmit, to the optical receiving device, an optical signal sent by the optical transmitting device, and the identifier of the first optical channel is different from an identifier of the second optical channel. Because a phase error caused by the second optical channel on the optical signal may be different from a phase error caused by the first optical channel on the optical signal, the determining apparatus determines the phase compensation coefficient based on an identifier of the optical channel. This helps more accurately compensate for the phase error in the signal and further reduce a bit error rate.

Optionally, the optical interconnection network includes one or more optical switching devices, and the controller is further configured to control, based on the data transmission request, the optical interconnection network to generate the first optical channel in the first slot. Correspondingly, the optical signal sent by the optical transmitting device in the first slot reaches the optical receiving device through the first optical channel. In this way, the phase compensation information that is in the first slot and that is indicated by the configuration information is more accurately used to compensate for a phase error in the optical signal received by the optical receiving device in the first slot, thereby reducing a bit error rate.

According to a second aspect, this application provides a system. The system may be an optical network. The system may include a plurality of optical communication devices, an optical interconnection network, and a controller. An optical communication device that has at least a function of sending an optical signal in the plurality of optical communication devices or an optical module (or an optical interface) in the optical communication device is referred to as an optical transmitting device, and an optical communication device that has at least a function of receiving an optical signal in the plurality of optical communication devices or an optical module in the optical communication device is referred to as an optical receiving device. The optical interconnection network is configured to provide an optical channel (or referred to as an optical link or an optical path) between different optical communication devices. The optical channel is used to transmit an optical signal. For example, the optical channel includes or passes through one or more optical fibers. In this application, an optical channel that is in the optical interconnection network and that is used to transmit, to the optical receiving device in a first slot, an optical signal sent by the optical transmitting device is referred to as a first optical channel.

The system may transmit data in a TDMA manner. After the system allocates a slot for data or data transmission, the optical transmitting device is configured to send the data in the slot, the optical interconnection network is configured to provide an optical channel between the optical transmitting device and the optical receiving device in the slot, and the optical receiving device is configured to receive the data in the slot. A same optical receiving device may be configured to receive data from different optical transmitting devices in a time division manner.

The optical transmitting device is configured to perform the method performed by the optical transmitting device in the first aspect, the optical receiving device is configured to perform the method performed by the optical receiving device in the first aspect, and the controller is configured to perform the method performed by the controller in the first aspect.

Optionally, the optical transmitting device is configured to send a data transmission request to the controller, where the data transmission request indicates that the optical transmitting device has a requirement for sending first data to the optical receiving device in a first slot. The controller is configured to send configuration information to the optical transmitting device based on the data transmission request, where the configuration information indicates the optical transmitting device to send the first data in the first slot based on a first phase compensation coefficient of a first optical channel in an optical interconnection network, and the first optical channel is used to transmit, to the optical receiving device in the first slot, an optical signal sent by the optical transmitting device. The optical transmitting device is configured to carry the first data on a first optical signal in the first slot based on the first phase compensation coefficient according to an indication of the configuration information, and then input the first optical signal on which phase compensation is performed into the first optical channel. The optical receiving device is configured to recover, in the first slot, the first data from the first optical signal that is output by the first optical channel.

Optionally, the first phase compensation coefficient is a phase compensation coefficient that corresponds to an identifier of the first optical channel and that is obtained from phase compensation information, and the phase compensation information indicates a correspondence between an identifier of an optical channel in the optical interconnection network and a phase compensation coefficient.

Optionally, the phase compensation information is determined based on a phase of an optical signal that is output by the optical channel in the optical interconnection network in a second slot, and the second slot includes one or more slots before the first slot.

Optionally, the identifier of the first optical channel is used to determine the first optical channel from a plurality of optical channels in the optical interconnection network, and at least two optical channels in the plurality of optical channels are separately used to transmit, to the optical receiving device, the optical signal sent by the optical transmitting device.

Optionally, the optical transmitting device is specifically configured to generate a first clock signal based on a phase value indicated by the first phase compensation coefficient, carry the first data on a first optical signal based on the first clock signal, and convert the first electrical signal into the first optical signal.

Optionally, the optical interconnection network includes one or more optical switching devices, and the controller is further configured to control, based on the data transmission request, the optical interconnection network to generate the first optical channel in the first slot.

For technical effects that can be achieved by the system provided in the second aspect, refer to the technical effects achieved by the corresponding method example provided in the first aspect. Details are not described herein again.

According to a third aspect, this application provides a method. The method may be applied to a controller, and the controller may be configured to perform the method performed by the controller in the first aspect.

Optionally, the controller may receive a data transmission request from an optical transmitting device, where the data transmission request indicates that the optical transmitting device has a requirement for sending first data to an optical receiving device in a first slot; and send configuration information to the optical transmitting device based on the data transmission request, where the configuration information indicates the optical transmitting device to send the first data in the first slot based on a first phase compensation coefficient of a first optical channel in an optical interconnection network, and the first optical channel is used to transmit, to the optical receiving device in the first slot, an optical signal sent by the optical transmitting device.

Optionally, the first phase compensation coefficient is a phase compensation coefficient that corresponds to an identifier of the first optical channel and that is obtained from phase compensation information, and the phase compensation information indicates a correspondence between an identifier of an optical channel in the optical interconnection network and a phase compensation coefficient.

Optionally, the phase compensation information is determined based on a phase measurement result of an optical signal that is output by the optical channel in the optical interconnection network in a second slot, and the second slot includes one or more slots before the first slot.

Optionally, the phase compensation coefficient that corresponds to the identifier of the first optical channel and that is indicated by the phase compensation information is a phase compensation coefficient in a plurality of phase compensation coefficients that matches a first phase measurement result, and the first phase measurement result is a phase measurement result of an optical signal that is output by the first optical channel in the second slot.

Optionally, the identifier of the first optical channel is used to determine the first optical channel from a plurality of optical channels in the optical interconnection network, and at least two optical channels in the plurality of optical channels are separately used to transmit, to the optical receiving device, the optical signal sent by the optical transmitting device.

Optionally, the optical interconnection network includes one or more optical switching devices, and the controller may further control, based on the data transmission request, the optical interconnection network to generate the first optical channel in the first slot.

For technical effects that can be achieved by the method provided in the third aspect, refer to the technical effects achieved by the foregoing corresponding system method. Details are not described herein again.

According to a fourth aspect, this application provides a controller. The controller may be configured to perform the method performed by the controller in the first aspect or the third aspect. An implementation of the controller is not limited in this application. The controller may be implemented by using software, hardware, or a combination of software and hardware.

Optionally, the controller may include a receiving module and a sending module. The receiving module is configured to receive a data transmission request from an optical transmitting device, where the data transmission request indicates that the optical transmitting device has a requirement for sending first data to an optical receiving device in a first slot. The sending module is configured to send configuration information to the optical transmitting device based on the data transmission request, where the configuration information indicates the optical transmitting device to send the first data in the first slot based on a first phase compensation coefficient of a first optical channel in an optical interconnection network, and the first optical channel is used to transmit, to the optical receiving device in the first slot, an optical signal sent by the optical transmitting device. Optionally, the sending module is further configured to control, based on the data transmission request, the optical interconnection network to generate the first optical channel in the first slot.

Optionally, the first phase compensation coefficient is a phase compensation coefficient that corresponds to an identifier of the first optical channel and that is obtained from phase compensation information, and the phase compensation information indicates a correspondence between an identifier of an optical channel in the optical interconnection network and a phase compensation coefficient.

Optionally, the phase compensation information is determined based on a phase measurement result of an optical signal that is output by the optical channel in the optical interconnection network in a second slot, and the second slot includes one or more slots before the first slot.

Optionally, the phase compensation coefficient that corresponds to the identifier of the first optical channel and that is indicated by the phase compensation information is a phase compensation coefficient in a plurality of phase compensation coefficients that matches a first phase measurement result, and the first phase measurement result is a phase measurement result of an optical signal that is output by the first optical channel in the second slot.

Optionally, the identifier of the first optical channel is used to determine the first optical channel from a plurality of optical channels in the optical interconnection network, and at least two optical channels in the plurality of optical channels are separately used to transmit, to the optical receiving device, the optical signal sent by the optical transmitting device.

Optionally, the controller may include a processor and a memory. The processor is configured to execute computer instructions stored in the memory, to perform the method performed by the controller in the first aspect or the third aspect.

Division into the modules of the controller is merely an example, and is merely logical function division. There may be other division manners during actual implementation. For example, a plurality of modules may be combined or integrated into another system, or some features may be ignored or not performed.

According to a fifth aspect, this application provides a method. The method may be applied to an optical transmitting device, and the optical transmitting device may be configured to perform the method performed by the optical transmitting device in the first aspect.

Optionally, the optical transmitting device may send a data transmission request to a controller, where the data transmission request indicates that the optical transmitting device has a requirement for sending first data to an optical receiving device in a first slot; receive configuration information from the controller, where the configuration information indicates the optical transmitting device to send the first data in the first slot based on a first phase compensation coefficient of a first optical channel in an optical interconnection network, and the first optical channel is used to transmit, to the optical receiving device in the first slot, an optical signal sent by the optical transmitting device; and carry the first data on a first optical signal in the first slot based on the first phase compensation coefficient according to an indication of the configuration information, and then input the first optical signal on which phase compensation is performed into the first optical channel.

Optionally, the first phase compensation coefficient is a phase compensation coefficient that corresponds to an identifier of the first optical channel and that is obtained from phase compensation information, and the phase compensation information indicates a correspondence between an identifier of an optical channel in the optical interconnection network and a phase compensation coefficient.

Optionally, the phase compensation information is determined based on a phase measurement result of an optical signal that is output by the optical channel in the optical interconnection network in a second slot, and the second slot includes one or more slots before the first slot.

Optionally, the phase compensation coefficient that corresponds to the identifier of the first optical channel and that is indicated by the phase compensation information is a phase compensation coefficient in a plurality of phase compensation coefficients that matches a first phase measurement result, and the first phase measurement result is a phase measurement result of an optical signal that is output by the first optical channel in the second slot.

Optionally, the identifier of the first optical channel is used to determine the first optical channel from a plurality of optical channels in the optical interconnection network, and at least two optical channels in the plurality of optical channels are separately used to transmit, to the optical receiving device, the optical signal sent by the optical transmitting device.

Optionally, in a process of carrying the first data on the first optical signal based on the first phase compensation coefficient, the optical receiving device may generate a first clock signal based on a phase value indicated by the first phase compensation coefficient, carry the first data on a first optical signal based on the first clock signal, and convert the first electrical signal into the first optical signal.

For technical effects that can be achieved by the method provided in the fifth aspect, refer to the technical effects achieved by the foregoing corresponding system method. Details are not described herein again.

According to a sixth aspect, this application provides an optical transmitting device. The optical transmitting device may be configured to perform the method performed by the optical transmitting device in the first aspect or the fifth aspect. An implementation of the optical transmitting device is not limited in this application.

Optionally, the optical transmitting device may include a control module and a service module. The control module is configured to send a data transmission request to a controller, where the data transmission request indicates that the optical transmitting device has a requirement for sending first data to an optical receiving device in a first slot. The control module is further configured to receive configuration information from the controller, where the configuration information indicates the optical transmitting device to send the first data in the first slot based on a first phase compensation coefficient of a first optical channel in an optical interconnection network, and the first optical channel is used to transmit, to the optical receiving device in the first slot, an optical signal sent by the optical transmitting device. The control module is further configured to configure the first phase compensation coefficient for the service module in the first slot based on an indication of the configuration information. The service module is configured to carry the first data on a first optical signal in the first slot based on the first phase compensation coefficient, and then input the first optical signal on which phase compensation is performed into the first optical channel.

Optionally, the first phase compensation coefficient is a phase compensation coefficient that corresponds to an identifier of the first optical channel and that is obtained from phase compensation information, and the phase compensation information indicates a correspondence between an identifier of an optical channel in the optical interconnection network and a phase compensation coefficient.

Optionally, the phase compensation information is determined based on a phase measurement result of an optical signal that is output by the optical channel in the optical interconnection network in a second slot, and the second slot includes one or more slots before the first slot.

Optionally, the phase compensation coefficient that corresponds to the identifier of the first optical channel and that is indicated by the phase compensation information is a phase compensation coefficient in a plurality of phase compensation coefficients that matches a first phase measurement result, and the first phase measurement result is a phase measurement result of an optical signal that is output by the first optical channel in the second slot.

Optionally, the identifier of the first optical channel is used to determine the first optical channel from a plurality of optical channels in the optical interconnection network, and at least two optical channels in the plurality of optical channels are separately used to transmit, to the optical receiving device, the optical signal sent by the optical transmitting device.

Optionally, in a process of carrying the first data on the first optical signal based on the first phase compensation coefficient, the service module is specifically configured to generate a first clock signal based on a phase value indicated by the first phase compensation coefficient, carry the first data on a first optical signal based on the first clock signal, and convert the first electrical signal into the first optical signal.

Division into the modules of the optical transmitting device is merely an example, and is merely logical function division. There may be other division manners during actual implementation. For example, a plurality of modules may be combined or integrated into another system, or some features may be ignored or not performed. For example, the control module may be implemented by reading computer instructions in a memory by a processor, and the service module may include an encoder, a clock module, and an optical transmitter.

According to a seventh aspect, this application provides a transmitting device. The transmitting device includes a control module and a service module, the service module is configured to connect to an optical module, and the optical module is configured to convert an input electrical signal into an optical signal. The control module is configured to send a data transmission request to a controller, where the data transmission request indicates that the optical transmitting device has a requirement for sending first data to an optical receiving device in a first slot. The control module is further configured to receive configuration information from the controller, where the configuration information indicates the optical transmitting device to send the first data in the first slot based on a first phase compensation coefficient of a first optical channel in an optical interconnection network, and the first optical channel is used to transmit, to the optical receiving device in the first slot, an optical signal sent by the optical transmitting device. The control module is further configured to configure the first phase compensation coefficient for the service module in the first slot based on an indication of the configuration information. The service module is configured to carry the first data on a first optical signal in the first slot based on the first phase compensation coefficient, and then input the first electrical signal on which phase compensation is performed into the optical module.

Optionally, the first phase compensation coefficient is a phase compensation coefficient that corresponds to an identifier of the first optical channel and that is obtained from phase compensation information, and the phase compensation information indicates a correspondence between an identifier of an optical channel in the optical interconnection network and a phase compensation coefficient.

Optionally, the phase compensation information is determined based on a phase measurement result of an optical signal that is output by the optical channel in the optical interconnection network in a second slot, and the second slot includes one or more slots before the first slot.

Optionally, the phase compensation coefficient that corresponds to the identifier of the first optical channel and that is indicated by the phase compensation information is a phase compensation coefficient in a plurality of phase compensation coefficients that matches a first phase measurement result, and the first phase measurement result is a phase measurement result of an optical signal that is output by the first optical channel in the second slot.

Optionally, the identifier of the first optical channel is used to determine the first optical channel from a plurality of optical channels in the optical interconnection network, and at least two optical channels in the plurality of optical channels are separately used to transmit, to the optical receiving device, the optical signal sent by the optical transmitting device.

Optionally, in a process of carry the first data on the first electrical signal based on the first phase compensation coefficient, the service module is specifically configured to generate a first clock signal based on a phase value indicated by the first phase compensation coefficient, and carry the first data on the first electrical signal based on the first clock signal.

Division into the modules of the transmitting device is merely an example, and is merely logical function division. There may be other division manners during actual implementation. For example, a plurality of modules may be combined or integrated into another system, or some features may be ignored or not performed.

In some examples, it may be considered that the optical transmitting device described in the sixth aspect includes the transmitting device and the optical module provided in the seventh aspect.

According to an eighth aspect, this application provides a computer-readable storage medium. The computer-readable storage medium includes instructions. When the instructions are run on a computer device, the computer device is enabled to perform the method performed by any one of the foregoing apparatuses, for example, perform the method in the third aspect or the fifth aspect, or implement a function of the control module in the sixth aspect or the seventh aspect.

According to a ninth aspect, a computer program product is provided. When the computer program product runs on a computer device, the computer device is enabled to perform the method performed by any one of the foregoing apparatuses, for example, perform the method in the third aspect or the fifth aspect, or implement a function of the control module in the sixth aspect or the seventh aspect.

The apparatuses provided in examples of this application may be configured to perform the foregoing corresponding example methods. Therefore, for technical effects that can be achieved by the apparatus examples in this application, refer to the technical effects achieved by the foregoing corresponding method examples. Details are not described herein again.

A form of the first data is not limited in this application. For example, the first data may be data in an electrical signal form. In a process in which the optical transmitting device carrying the first data on an optical signal, the optical transmitting device may convert the first data in the electrical signal form into the optical signal. A transmission mode of the first optical signal is not limited in this application. For example, the first optical signal may be a signal in an optical burst mode (or referred to as an optical burst signal).

### BRIEF DESCRIPTION OF DRAWINGS

FIG. 1 illustratively shows a structure of a system according to this application;
FIG. 2 is a diagram illustrating electrical signals obtained by an optical communication device 2 through conversion in different slots;
FIG. 3 illustratively shows another possible structure of a system and a possible procedure of a method performed by the system according to this application;
FIG. 4-1 illustratively shows a possible structure of the optical transmitting device shown in FIG. 3 and a possible detailed procedure of S303;
FIG. 4-2 illustratively shows a possible structure of the optical receiving device shown in FIG. 3 and a possible detailed procedure of S304;
FIG. 5 is a diagram of a possible slot in a method procedure according to this application;
FIG. 6 illustratively shows a possible structure of a controller according to this application; and
FIG. 7 illustratively shows a possible structure of an optical communication device according to this application.

### DESCRIPTION OF EMBODIMENTS

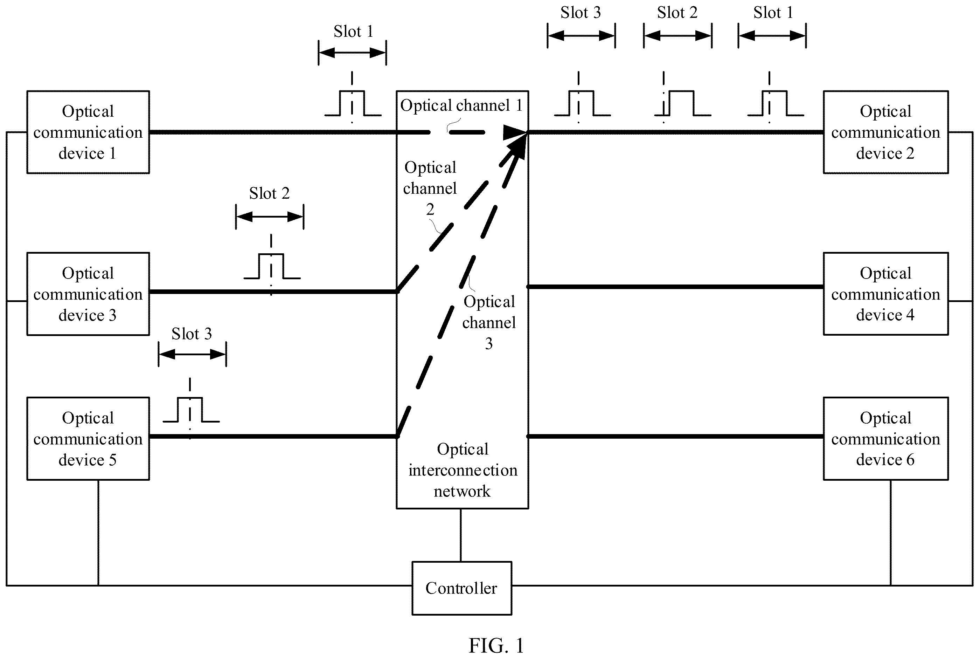

This application provides a system. The system may be an optical network shown in FIG. 1. Refer to FIG. 1. The system may include an optical interconnection network, a controller, and an optical communication device 1 to an optical communication device 6. The system may include more or fewer devices than those shown in FIG. 1, for example, may include more or fewer optical communication devices.

The optical communication device may be an optical transmitting device, and the optical transmitting device is configured to send an optical signal carrying data to the optical interconnection network. Alternatively, the optical communication device may be an optical receiving device, and the optical receiving device is configured to recover data from a received optical signal. The optical communication device may be not only an optical transmitting device but also an optical receiving device. A type of the optical communication device is not limited in this application. For example, the optical communication device may be an optical line terminal (optical line terminal, OLT), an optical network unit (optical network unit, ONU), a router, a switch, a server, an optical transport network (optical transport network, OTN) transport device, or a computer device.

The optical communication device is connected to the optical interconnection network, the optical interconnection network is configured to provide an optical channel between different optical communication devices, and the optical channel is used to transmit an optical signal. For example, refer to FIG. 1. The optical interconnection network may provide an optical channel 1 to an optical channel 3. The optical channel 1 is configured to transmit, to the optical communication device 2, an optical signal sent by the optical communication device 1, the optical channel 2 is configured to transmit, to the optical communication device 2, an optical signal sent by the optical communication device 3, and the optical channel 3 is configured to transmit, to the optical communication device 2, an optical signal sent by the optical communication device 5. The optical interconnection network may provide more or fewer optical channels.

The system may be a multipoint-to-multipoint communication system. For example, the optical communication device 1 may further send data to the optical communication device 4 and/or the optical communication device 6 through the optical interconnection network. The system may be a point-to-multipoint communication system. For example, the system may not include the optical communication device 4 or the optical communication device 6.

The optical communication device may include one or more ports, and the optical communication device is configured to send an optical signal or receive an optical signal through the port. The optical channel is used to connect two different ports. When the optical communication device includes a plurality of ports, the optical communication device may be connected to a plurality of optical channels through the plurality of ports.

The optical channel may include or pass through one or more optical fibers. Optionally, the optical interconnection network may further include an optical device other than an optical fiber. For example, the optical interconnection network may include one or more passive optical devices such as passive optical splitters, and/or include one or more optical switching devices. The optical switching device is configured to switch an optical signal. A quantity and types of optical switching devices are not limited in this application. For example, the optical switching device supports all-optical switching. All-optical switching means that an optical signal received by an optical input end is directly switched to any optical output end of the optical switching device without performing any optical-to-electrical conversion or electrical-to-optical conversion.

The controller may be separately connected to the optical communication device 1 to the optical communication device 6, may be further connected to the optical interconnection network, and performs a control plane service by exchanging control information with a connected device. In FIG. 1, a relatively thick connection line represents a data transmission channel (or referred to as an in-band channel), and a relatively thin connection line represents a control information transmission channel. In this application, an example in which the control information transmission channel is an out-of-band channel is used.

An application scenario of the system is not limited in this application. For example, the optical network may be applied to a data center network (data1 center network, DCN), a metropolitan area network, a passive optical network (passive optical network, PON), an OTN, and the like. This is not specifically limited. A deployment manner of the system is not limited in this application. For example, the optical network may be deployed in a single cabinet or a plurality of cabinets in a data center.

The system may transmit data in a TDMA manner. Optionally, the data may be burst data. After the system allocates a slot for data or data transmission, the optical transmitting device sends the data in the slot, the optical interconnection network provides an optical channel between the optical transmitting device and the optical receiving device in the slot, and the optical receiving device receives the data in the slot. A same optical receiving device may receive data from different optical transmitting devices in a time division manner. For example, refer to FIG. 1. The optical communication device 1 may input an optical signal 1 to an optical channel 1 in a slot 1, and correspondingly, the optical communication device 2 may receive the optical signal 1 from the optical channel 1 in the slot 1. The optical communication device 3 may input an optical signal 2 to an optical channel 2 in a slot 2, and correspondingly, the optical communication device 2 may receive the optical signal 2 from the optical channel 2 in the slot 2. The optical communication device 5 may input an optical signal 32 to an optical channel 3 in a slot 3, and correspondingly, the optical communication device 2 may receive the optical signal 3 from the optical channel 3 in the slot 3.

For different optical channels, phases of input optical signals, distances of optical links, channel conditions, and the like usually differ greatly. Therefore, optical signals that are output through different optical channels have phase errors at different degrees. The phase error may be a phase difference between an optical signal and a target signal. The target signal may be a reference clock signal (or referred to as a line clock signal or a local clock signal) in the system. In the following, an example in which the target signal is a reference clock is used, and a phase error of a signal is referred to as a phase of the signal for short. Correspondingly, it may be considered that a phase of the target signal is 0.

In FIG. 1, a vertical dashed line represents a sampling location (referred to as a default sampling point) at which sampling is performed based on the target signal. Refer to FIG. 1. Before the optical signal 1 to the optical signal 3 are input into the optical interconnection network, an optimal sampling point of a signal is aligned with the default sampling point. In other words, a phase of each optical signal is 0. In a process of transmitting the optical signal 1 to the optical signal 3 through the optical interconnection network, an optical channel causes phase distortion on the optical signal. As a result, when the optical signal 1 to the optical signal 3 are output to the optical communication device 2 through the optical interconnection network, the optimal sampling point of the signal is no longer aligned with the default sampling point. This increases a bit error rate of the signal. For example, refer to FIG. 1. If a difference between an optimal sampling point of the optical signal 2 and the default sampling point is the largest, it may be considered that a phase of the optical signal 2 is the largest. If a difference between an optimal sampling point of the optical signal 3 and the default sampling point is the smallest, it may be considered that a phase of the optical signal 3 is the smallest.

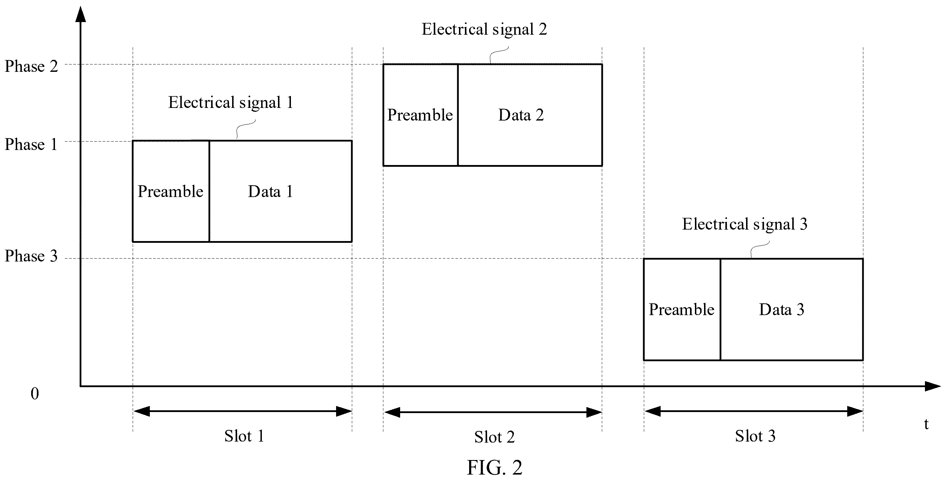

After receiving the optical signal, the optical communication device 2 may convert the optical signal into an electrical signal, and recover data from the electrical signal. A phase of the electrical signal may be used to measure a phase of the corresponding optical signal on arrival at the optical communication device 2. FIG. 2 is a diagram illustrating electrical signals obtained by an optical communication device 2 through conversion in different slots. Refer to FIG. 2. The optical communication device 2 converts the optical signal 1 into an electrical signal 1 in the slot 1, converts the optical signal 2 into an electrical signal 2 in the slot 2, and converts the optical signal 3 into an electrical signal 3 in the slot 3. A phase 1 to a phase 3 respectively represent phases of the electrical signal 1 to the electrical signal 3, and the phase 2 > the phase 1 > the phase 3.

To reduce a bit error rate, before data (or referred to as a payload) is transmitted between optical communication devices, a preamble is further transmitted additionally. Refer to FIG. 2. After converting the optical signal 1 into the electrical signal 1, the optical communication device 2 may recover a clock signal 1 of the phase 1 from a preamble in a form of an electrical signal, and then recover data 1 from the electrical signal 1 based on the clock signal 1. After converting the optical signal 2 into the electrical signal 2, the optical communication device 2 may recover a clock signal 2 of the phase 2 from a preamble in a form of an electrical signal, and then recover data 2 from the electrical signal 2 based on the clock signal 2. By analogy, after converting the optical signal 3 into the electrical signal 3, the optical communication device 2 may recover a clock signal 3 of the phase 3 from a preamble in a form of an electrical signal, and then recover data 3 from the electrical signal 3 based on the clock signal 3.

In a process in which the optical communication device 2 recovers the clock signal of the phase 2 from the preamble in the form of the electrical signal, a data recovery (clock and data recovery, CDR) unit (CDR for short) in the optical communication device 2 uses a reference clock signal or the clock signal 1 recovered in a previous slot as an initial clock signal, and continuously adjusts a phase of the clock signal, to gradually approach an optimal sampling point of the electrical signal, so as to recover the clock signal 2. Because a delay in recovering the clock signal by the optical communication device 2 is relatively long, overheads of the preamble are relatively large. This reduces data transmission efficiency of the system.

For different optical channels, phases of input optical signals, distances of optical links, and channel conditions usually differ greatly. However, when another impact factor is not considered, phases of optical signals received by the optical communication device 2 in different slots through a same optical channel are the same. Based on the foregoing consideration, this application provides a communication method applied to the foregoing system. The system may compensate, based on a phase compensation coefficient of an optical channel, for a phase error existing when an optical signal arrives at an optical receiving device through the optical channel, thereby helping reduce a bit error rate. In addition, because impact of a same optical channel on a phase of an optical signal is usually fixed, compensating for the phase error by the system on an optical transmitting device side and/or an optical receiving device side based on the phase compensation coefficient of the optical channel helps quickly complete configuration of the phase compensation coefficient when a first slot arrives, thereby improving data transmission efficiency of optical communication. The following describes a possible procedure of the communication method with reference to the accompanying drawings.

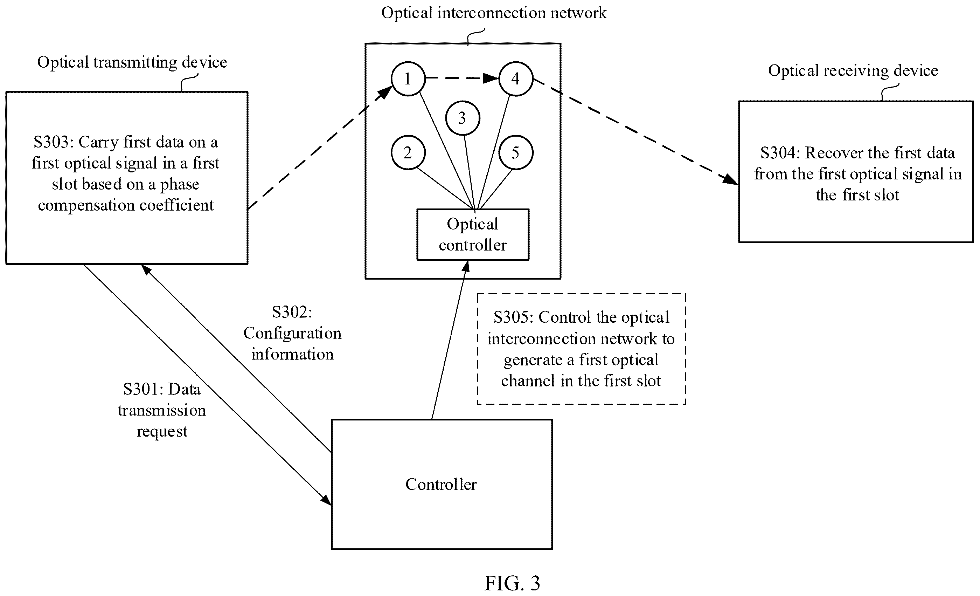

FIG. 3 illustratively shows another possible structure of a system according to this application. Refer to FIG. 3. An optical transmitting device may be understood with reference to the optical communication device 1, the optical communication device 3, or the optical communication device 5 shown in FIG. 1, an optical receiving device may be understood with reference to the optical communication device 2 shown in FIG. 1, and a controller and an optical interconnection network may be respectively understood with reference to the controller and the optical interconnection network shown in FIG. 1.

A circle shown in FIG. 3 may represent an optical switching device in the optical interconnection network. In FIG. 3, an example in which the optical interconnection network includes an optical switching device 1 to an optical switching device 5 is used. The optical interconnection network may include more or fewer optical switching devices. For example, the optical interconnection network may not include an optical switching device.

In FIG. 3, a solid line with an arrow represents an out-of-band channel, and the out-of-band channel is used to transmit out-of-band service information in a form of an optical signal or an electrical signal. In FIG. 3, a dashed line with an arrow represents an in-band channel, and the in-band channel is used to transmit user data in a form of an optical signal. In this application, an optical channel that is in the optical interconnection network and that is used to transmit, to an optical receiving device in a first slot, an optical signal sent by an optical transmitting device is referred to as a first optical channel. Refer to FIG. 3. An optical signal that is input by the optical transmitting device to the first optical channel may be forwarded to the optical receiving device sequentially through the optical switching device 1 and the optical switching device 4. A quantity of optical switching devices that are included in the first optical channel or through which the first optical channel passes is not limited in this application. Optionally, the first optical channel may not include or not pass through any optical switching device.

FIG. 3 further illustratively shows a possible procedure of a communication method according to this application. In the method shown in FIG. 3, a system compensates for a phase error on an optical transmitting device side based on a phase compensation coefficient of an optical channel. Refer to FIG. 3. The communication method may include S301 to S304.

S301: An optical transmitting device sends a data transmission request to a controller, and correspondingly, the controller may receive the data transmission request from the optical transmitting device.

When the optical transmitting device has a requirement for sending data (referred to as first data) to an optical receiving device in a slot (referred to as a first slot), the optical transmitting device may send the data transmission request to the controller. The data transmission request indicates that the optical transmitting device has the requirement for sending the first data to the optical receiving device in the first slot. Correspondingly, the controller may be configured to receive the data transmission request.

Optionally, the data transmission request may carry information about the first slot, and the information about the first slot includes, for example, at least two of a start moment of the first slot, an end moment of the first slot, and duration of the first slot. Alternatively, optionally, the data transmission request may not include information about the first slot, and the controller may determine the first slot based on the data transmission request. For example, the controller may use an n^{th} slot after reception of the data transmission request as the first slot, where n is a positive integer. For example, the controller may allocate the first slot for the data transmission request, and then send information about the first slot to the optical transmitting device, to indicate the optical transmitting device to send a first optical signal in the first slot.

The data transmission request may include address information of the optical transmitting device and/or address information of the optical receiving device. The address information of the optical transmitting device may include a media access control address (media access control address, MAC) of the optical transmitting device. Similarly, the address information of the optical receiving device may include a MAC of the optical receiving device.

Optionally, the optical transmitting device includes one or more transmit ports, and the transmit port is configured to input, into an optical fiber in an optical interconnection network, an optical signal sent by the optical transmitting device. Optionally, the address information of the optical transmitting device may include address information of a transmit port (referred to as a first port). The address information of the first port may include the MAC of the optical transmitting device and an identifier of the first port. The identifier of the first port is used to determine the first port from a plurality of ports of the optical transmitting device.

Optionally, the optical receiving device includes one or more receive ports, and the receive port is configured to input, into the optical receiving device, an optical signal that is output from the optical fiber in the optical interconnection network. Optionally, the address information of the optical transmitting device may include address information of a receive port (referred to as a second port). The address information of the second port may include the MAC of the optical receiving device and an identifier of the second port. The identifier of the second port is used to determine the second port from a plurality of ports of the optical receiving device.

When the data transmission request includes the address information of the first port and the address information of the second port, the data transmission request indicates that the first port has a requirement for sending the first optical signal to the second port in the first slot. Correspondingly, a first optical channel is used to transmit, to the second port, the optical signal sent by the first port.

S302: The controller sends configuration information to the optical transmitting device based on the data transmission request, and correspondingly, the optical transmitting device may receive the configuration information.

After receiving the data transmission request, the controller may determine that the first optical channel is used to transmit an optical signal between the optical transmitting device and the optical receiving device in the first slot, and then send the configuration information to the optical transmitting device based on the data transmission request. The configuration information indicates the optical transmitting device to send the first data in the first slot based on a phase compensation coefficient of the first optical channel, and the phase compensation coefficient of the first optical channel may be used to compensate for impact of the first optical channel on a phase of an optical signal. For ease of description, the phase compensation coefficient indicated by the configuration information is referred to as a first phase compensation coefficient below. Correspondingly, the optical transmitting device may receive the configuration information, and determine an indication of the configuration information.

Optionally, the controller may determine an identifier of the first optical channel based on the data transmission request, and then determine the first phase compensation coefficient based on the identifier of the first optical channel. Correspondingly, the configuration information may include the first phase compensation coefficient.

The first phase compensation coefficient may indicate a value of a phase (referred to as a first phase value). The first phase value may be an absolute value of the phase, or may be a ratio of an absolute value of the phase to a unit phase value. The unit phase value may be a fixed phase value. For example, the unit phase value may be a value of a minimum phase variation in a process in which the optical transmitting device adjusts a clock signal. In an example, the unit phase value may be 1/16 unit interval (unit interval, UI).

Optionally, after determining the identifier of the first optical channel, the controller may carry the identifier of the first optical channel on the configuration information. After receiving the configuration information, the optical transmitting device may determine the first phase compensation coefficient based on the identifier of the first optical channel. Correspondingly, the configuration information may not include the first phase compensation coefficient. This helps reduce a length of control information, and save transmission resources of a control channel.

For ease of description, in this application, an apparatus configured to determine the first phase compensation coefficient based on the identifier of the first optical channel is referred to as a determining apparatus, and the determining apparatus may be the controller, the optical transmitting device, or another device.

Optionally, the determining apparatus may obtain phase compensation information, where the phase compensation information indicates a correspondence between an identifier of an optical channel in the optical interconnection network and a phase compensation coefficient. After determining the identifier of the first optical channel, the determining apparatus may obtain, from the phase compensation information, a phase compensation coefficient (that is, the first phase compensation coefficient) corresponding to the identifier of the first optical channel.

A manner in which the phase compensation information indicates the correspondence is not limited in this application. For example, the phase compensation information may be a machine learning model, and the machine learning model is used to output a phase compensation coefficient of a corresponding optical channel based on an input identifier of the optical channel. Alternatively, an identifier of an optical channel and a phase compensation coefficient of the optical channel are recorded in association in the phase compensation information. For example, the phase compensation information may be one or more key-value pairs, and the identifier of the first optical channel and the first phase compensation coefficient may be respectively a key and a value of a key-value pair.

Table 1 illustratively shows some key-value pairs in the phase compensation information. In Table 1, a first column represents an identifier of an optical channel, a second column represents a phase compensation coefficient of the optical channel, and an identifier and a phase compensation coefficient in a same row correspond to a same optical channel. For example, ID₁ and φ₁ respectively represent an identifier and a phase compensation coefficient of the optical channel 1 shown in FIG. 1, ID₂ and φp₂ respectively represent an identifier and a phase compensation coefficient of the optical channel 2 shown in FIG. 1, and ID₃ and φ₃ respectively represent an identifier and a phase compensation coefficient of the optical channel 3 shown in FIG. 1.

**Table 1**

| Identifier of an optical channel | Phase compensation coefficient |
|---|---|
| ID₁ | φ₁ |
| ID₂ | φ₂ |
| ID₃ | φ₃ |
| ... | ... |

A location for storing the phase compensation information is not limited in this application. For example, the phase compensation information may be stored in the determining apparatus, or stored in an apparatus other than the determining apparatus.

A manner of obtaining the phase compensation information by the determining apparatus is not limited in this application. For example, the determining apparatus may receive the phase compensation information from another device. Alternatively, the determining apparatus may generate the phase compensation information based on parameter information and/or a phase measurement result of the optical channel in the optical interconnection network.

The parameter information of the optical channel includes but is not limited to a phase of an optical signal sent by the optical transmitting device to the optical channel, a length of an optical fiber that the optical channel passes through, and/or a channel condition (for example, an attenuation status of a signal phase in a unit length). The parameter information of the optical channel may be used to measure a phase error caused by the optical channel on an optical signal.

The phase measurement result of the optical channel includes a result (referred to as a value of an output phase) of phase measurement performed by the optical receiving device on an optical signal received from the optical channel in a second slot, and the second slot may include one or more slots before the first slot. The result of phase measurement performed on the optical signal may indicate a phase of the optical signal that is output by the optical channel. That is, the phase measurement result of the optical channel may be used to measure a phase error caused by the optical channel on an optical signal, and therefore may be used to determine a correspondence between an identifier of the optical channel and a phase compensation coefficient.

Optionally, a value of a phase indicated by the phase compensation coefficient of the optical channel is opposite to the value of the output phase, or a sum of the two is 1 UI. Correspondingly, the phase compensation coefficient may indicate the optical transmitting device to set a phase variation of a phase of a to-be-sent signal to the value indicated by the phase compensation coefficient, so that a value of the phase of the signal sent by the optical transmitting device is a default value + the value indicated by the phase compensation coefficient.

Optionally, the phase measurement result of the optical channel may further include a value of a phase of an optical signal that is input by the optical transmitting device to the optical channel in the second slot (referred to as a value of an input phase). The value of the phase indicated by the phase compensation coefficient of the optical channel may be the value of the input phase - the value of the output phase. Correspondingly, the phase compensation coefficient may indicate the optical transmitting device to adjust a value of a phase of a to-be-sent signal to the value indicated by the phase compensation coefficient.

The following describes, by using an example, a process in which the optical receiving device performs phase measurement on an optical signal received from the first optical channel in the second slot.

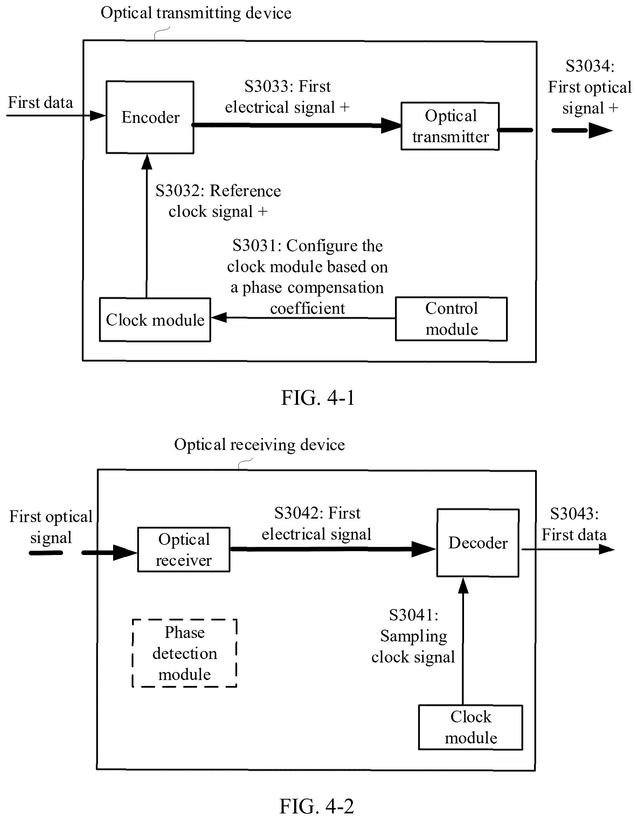

The optical transmitting device may report, to the controller, that there is a requirement for sending second data to the optical receiving device in the second slot, and the controller may control, in the second slot, the optical interconnection network to generate the first optical channel. The optical transmitting device may carry the second data on a second optical signal in the second slot, and input the second optical signal into the first optical channel. The second data may be service data or a preamble pre-learned by the optical receiving device. It is assumed that a phase of an optical signal sent by the optical transmitting device is X. After receiving the second optical signal from the first optical channel in the second slot, the optical receiving device may perform phase measurement on the second optical signal (it is assumed that an indicated value of a phase is X'), and send a phase measurement result to the determining apparatus. The determining apparatus may determine a correspondence between the identifier of the first optical channel and the first phase compensation coefficient based on the phase measurement result and the identifier of the first optical channel. For example, the first phase compensation coefficient indicates that an absolute value of a phase of a signal is X-X', or indicates that a relative value of a phase is -X'. Phase measurement performed on the second optical signal may indicate a detection result of a phase of the second optical signal, or a measurement result of a phase of a second electrical signal after the second optical signal is converted into the second electrical signal. Refer to FIG. 4-2. Optionally, the optical receiving device may further include a signal phase detection module, configured to perform phase measurement on a received optical signal. Optionally, the signal phase detection module may be a CDR. For example, after converting the second optical signal into the second electrical signal, the optical receiving device may detect a phase X' of the second electrical signal by using the CDR.

After obtaining a phase measurement result (referred to as a first phase measurement result) of an optical signal that is output by the first optical channel in the second slot, the determining apparatus or another apparatus may use a phase compensation coefficient (that is, the first phase compensation coefficient) in a plurality of phase compensation coefficients that matches the first phase measurement result as the phase compensation coefficient corresponding to the identifier of the first optical channel. It is assumed that the phase compensation coefficient indicates a phase of a sent signal. X-X' may be determined based on the first phase measurement result. The first phase compensation coefficient may be a phase compensation coefficient closest to X-X' in the plurality of phase compensation coefficients. For example, it is assumed that a maximum phase that can be configured by the optical transmitting device is 15/16 UI, the plurality of phase compensation coefficients are respectively 0 UI, 1/16 UI, 2/16 UI, ..., and 15/16 UI, and X-X' is 7/64 UI. In this case, the first phase compensation coefficient may be 2/16 UI.

It is assumed that the phase compensation information indicates phase compensation coefficients corresponding to n optical channels. Table 2 illustratively shows the phase compensation information. In Table 2, a first column represents an identifier of an optical channel, a second column represents a phase compensation coefficient of the optical channel, and an identifier and a phase compensation coefficient in a same row correspond to a same optical channel.

**Table 2**

| Identifier of an optical channel | Phase compensation coefficient |
|---|---|
| ID₂, IDₙ | 0 |
| ID₃ | 1/16 |
| ID₁, ID₄ | 2/16 |
| ... | ... |
| ID₅, IDₙ₋₁ | 15/16 |

Refer to Table 2. The phase compensation coefficient indicated by the phase compensation information is limited to a plurality of fixed values (16 values are used as an example in Table 2). This helps reduce a byte length of the phase compensation coefficient in the phase compensation information and save storage resources, and helps reduce phase compensation complexity of an optical communication device.

The second slot may include one or more slots. The determining apparatus determines the phase compensation coefficient based on phase measurement results in a plurality of slots. This helps improve accuracy of the phase compensation coefficient. Optionally, after receiving the first optical signal from the first optical channel in the first slot, the optical receiving device further performs phase measurement on the first optical signal, and sends a phase measurement result to the determining apparatus. The determining apparatus may update, based on the phase measurement result, the phase compensation coefficient corresponding to the first optical channel.

In addition to the identifier of the first optical channel or the first phase compensation coefficient, the configuration information may further include other information.

For example, the configuration information further includes information about the first slot, to indicate the first slot. Alternatively, optionally, the configuration information may not include information about the first slot, and the optical receiving device may determine the first slot based on the configuration information. For example, the optical receiving device may use a p^{th} slot after reception of the configuration information as the first slot, where p is a positive integer. For example, the optical transmitting device may determine that the configuration information corresponds to the data transmission request, thereby determining that a slot indicated by the configuration information is the first slot.

For example, the configuration information may further include the address information of the optical transmitting device and/or the address information of the optical receiving device described above. Alternatively, the configuration information may not include the address information of the optical transmitting device or the address information of the optical receiving device. The optical transmitting device may determine that the configuration information corresponds to the data transmission request, thereby determining that a source device and a destination device indicated by the configuration information are the optical transmitting device and the optical receiving device respectively.

S303: The optical transmitting device carries the first data on the first optical signal in the first slot based on the first phase compensation coefficient according to the indication of the configuration information, and inputs the first optical signal on which phase compensation is performed into the first optical channel.

In a process of sending data, the optical transmitting device may carry the data on an optical signal, for example, obtain an electrical signal that carries the data, and then convert the electrical signal into the optical signal by using a modulator. That the optical transmitting device obtains the electrical signal that carries the data may mean that the optical transmitting device receives the electrical signal, or the optical transmitting device carries the data on the electrical signal, for example, encodes the data into an electrical signal form suitable for transmission by using an encoder.

In a process of carrying the data on the optical signal, the optical transmitting device may adjust a phase of the optical signal based on the phase compensation coefficient. The first phase compensation coefficient may indicate a phase value (referred to as a first phase value) of a signal. The phase value may be an absolute value or a relative value of a phase of the signal.

After receiving the configuration information, the optical transmitting device may carry the first data on an optical signal (referred to as the first optical signal) in the first slot based on the first phase compensation coefficient of the first optical channel according to the indication of the configuration information, and input the first optical signal on which phase compensation is performed into the first optical channel. In this way, after being transmitted through the first optical channel, the first optical signal reaches the optical receiving device at the target phase or a phase close to the target phase.

A manner in which the optical transmitting device adjusts a phase of an optical signal is not limited in this application. For example, the optical transmitting device may generate a first clock signal based on a phase value indicated by the first phase compensation coefficient, carry the first data on a first optical signal based on the first clock signal, and convert the first electrical signal into the first optical signal.

FIG. 4-1 illustratively shows a possible structure of an optical transmitting device. Refer to FIG. 4-1. The optical transmitting device includes a control module, a clock module, an encoder, and an optical transmitter. The clock module is configured to provide a reference clock signal for the encoder. The control module is configured to configure a phase of the reference clock signal that is output by the clock module. The encoder is configured to carry received data on an electrical signal based on the reference clock signal, and then input the electrical signal into the optical transmitter. The optical transmitter is configured to convert the electrical signal into an optical signal. The optical transmitter is configured to convert the input electrical signal into an optical signal.

FIG. 4-1 further illustratively shows a possible detailed procedure of step S303. Refer to FIG. 4-1. S303 may include S3031 to S3034.

S3031: The control module configures the clock module in the first slot based on the first phase compensation coefficient according to the indication of the configuration information.

S3032: The clock module is configured to input a reference clock signal + into the encoder based on the first phase compensation coefficient.

A phase of a reference clock signal that is output by the clock module configured based on the first phase compensation coefficient is used to compensate for a phase error caused by the first optical channel, and the reference clock signal is referred to as a compensated reference clock signal (denoted as the reference clock signal +).

S3033: The encoder carries the first data on a first electrical signal + based on the reference clock signal +, and inputs the first electrical signal + into the optical transmitter.

A first electrical signal generated by the encoder based on the reference clock signal + is used to compensate for a phase error caused by the first optical channel, and the first electrical signal is referred to as a first electrical signal on which phase compensation is performed (denoted as the first electrical signal +).

S3034: The optical transmitter modulates the first electrical signal + into a first optical signal +.

A first optical signal obtained by the optical transmitter by modulating the first electrical signal + may be used to compensate for a phase error caused by the first optical channel, and the first optical signal is referred to as a compensated first optical signal (denoted as the first optical signal +).

FIG. 4-1 is merely used as an example. The optical transmitting device may include more or fewer elements, for example, may further include a VGA.

Optionally, the optical interconnection network provides a maximum of a single optical channel for a single transmit port of the optical transmitting device in a single slot. Correspondingly, the optical transmitting device sends an optical signal through the first port in the first slot, that is, inputs the optical signal into the first optical channel.

Alternatively, optionally, the optical interconnection network may provide a plurality of optical channels for a single transmit port of the optical transmitting device in a single slot. The optical transmitting device may carry the address information of the optical receiving device on the first optical signal. After identifying the address information in the first optical signal, another optical communication device may not continue to process the first data. Correspondingly, it may be considered that the optical transmitting device sends an optical signal through the first port in the first slot, that is, inputs the optical signal into the first optical channel.

S304: The optical receiving device recovers, in the first slot, the first data from the first optical signal that is output by the first optical channel.

The first optical signal reaches the optical receiving device through the first optical channel, and the optical receiving device may receive the first optical signal from the first optical channel, and perform data recovery on the first optical signal.

Optionally, the optical interconnection network provides a maximum of a single optical channel for a single receive port of the optical receiving device in a single slot. Correspondingly, the optical receiving device receives an optical signal through the second port in the first slot, that is, receives the optical signal from the first optical channel.

Alternatively, optionally, the optical interconnection network may provide a plurality of optical channels for a single receive port of the optical receiving device in a single slot, and different optical communication devices send data to the optical receiving device in different slots. For example, the optical transmitting device sends the first data in the first slot. Correspondingly, the optical receiving device receives an optical signal through the second port in the first slot, that is, receives the optical signal from the first optical channel.

In a process of receiving data, the optical receiving device may convert an optical signal carrying the data into an electrical signal, and then recover the data from the electrical signal, for example, obtain the data from the electrical signal by using a decoder. In this application, the electrical signal may be a voltage signal. In a process of converting the optical signal carrying the data into the electrical signal, the optical receiving device may convert the optical signal into a current signal, and then convert the current signal into a voltage signal.

FIG. 4-2 illustratively shows a possible structure of an optical receiving device. Refer to FIG. 4-2. The optical receiving device includes a clock module, a decoder, and an optical receiver. The clock module is configured to input a sampling clock signal into the decoder. The optical receiver is configured to convert an optical signal into an electrical signal. The decoder is configured to recover data from the electrical signal based on the sampling clock signal. The optical receiver may include a photodetector (photodetector, PD) and a trans-impedance amplifier (trans-impedance amplifier, TIA). The PD is configured to convert an optical signal into a current signal, and the TIA is configured to convert the current signal into a voltage signal.

FIG. 4-2 further illustratively shows a possible detailed procedure of step S304. Refer to FIG. 4-2. S304 may include S3041 to S3043.

S3041: The clock module inputs the sampling clock signal into the decoder.

S3042: The optical receiver converts the first optical signal into a first electrical signal.

S3043: The decoder recovers the first data from the first electrical signal based on the sampling clock signal.

FIG. 4-2 is merely used as an example. The optical receiving device may include more or fewer elements, for example, may further include a limiting amplifier and/or a CDR.

After being transmitted through the first optical channel (for example, the first optical signal shown in FIG. 4-2), the first optical signal on which phase compensation is performed (for example, the first optical signal + shown in FIG. 4-1) reaches the optical receiving device at the target phase or a phase close to the target phase. This helps improve accuracy of data recovery performed by the optical receiving device on the first optical signal and reduce a bit error rate.

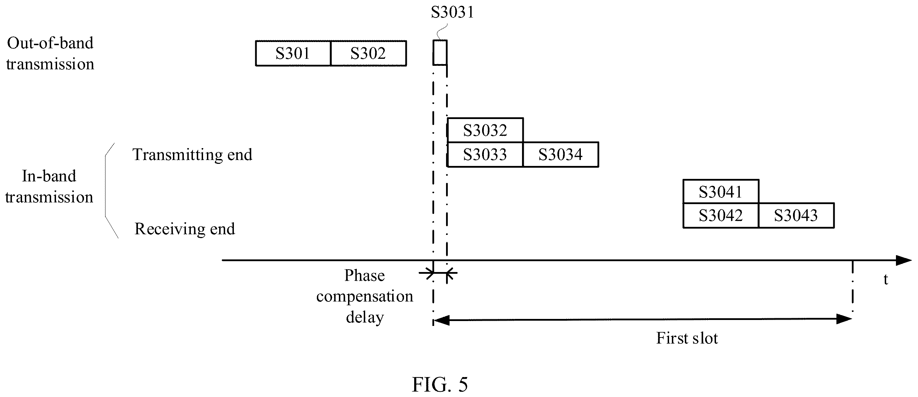

FIG. 5 is a diagram illustrating a slot for receiving data by the optical receiving device shown in FIG. 4-2. The optical receiving device may not need to configure the first phase compensation coefficient in the first slot by receiving the preamble. This helps reduce a link establishment delay of the optical receiving device, and improve data transmission efficiency of optical communication. Even if the optical receiving device still configures the first phase compensation coefficient by receiving the preamble, because the first optical signal compensated by a transmitting end reaches, after being transmitted through the first optical channel, the optical receiving device at a signal phase required by the optical receiving device or at a phase close to a signal phase required by the optical receiving device, this helps reduce a delay in configuring the first phase compensation coefficient by the optical receiving device, reduce overheads of the preamble (for example, as shown in FIG. 2), and improve data transmission efficiency of optical communication.

In addition, before actually sending the first optical signal, the optical transmitting device may determine a requirement for sending the first optical signal to the optical receiving device, and impact of a same optical channel on a phase of an optical signal is usually fixed. Therefore, as shown in FIG. 5, this helps the optical transmitting device and the controller respectively perform S301 and S302 before the first slot, and then helps the optical transmitting device quickly complete configuration of the first phase compensation coefficient (as shown in S3031) when the first slot arrives, thereby improving data transmission efficiency of optical communication.

Optionally, the optical interconnection network provides a fixed optical channel for an optical communication device in different slots. For example, an optical signal sent by the optical transmitting device through the first port in any slot is transmitted to the second port of the optical receiving device through the first optical channel. The controller may determine information about the first optical channel based on the data transmission request.

Optionally, the optical interconnection network may provide different optical channels for an optical communication device in different slots. The optical channel may include or pass through at least one optical switching device. The controller may be further configured to control the optical interconnection network to generate an optical channel between ports of different optical communication devices. Optionally, still refer to FIG. 3. The communication method may further include S305.

S305: The controller controls, based on the data transmission request, the optical interconnection network to generate the first optical channel in the first slot.

After receiving the data transmission request, the controller may control, based on the data transmission request, the optical interconnection network to generate the first optical channel in the first slot. In this way, the optical signal sent by the optical transmitting device through the first port in the first slot may reach the second port of the optical receiving device through the first optical channel.

Refer to FIG. 3. An optical controller may be separately connected to one or more optical switching devices, to control a process of switching an optical signal by the optical switching device, and generate an optical channel between different ports. The controller may be connected to the optical controller in the optical interconnection network. The controller sends an instruction to the optical controller, to indicate the optical controller to control the optical switching device to generate the first optical channel in the first slot. Alternatively, the controller may be the optical controller in the optical interconnection network.

Optionally, the optical interconnection network provides a plurality of optical channels between the optical transmitting device and the optical receiving device in a time division manner. For example, the controller may control, in a slot, the optical interconnection network to generate the first optical channel between the first port of the optical transmitting device and the second port of the optical receiving device, and control, in another slot, the optical interconnection network to generate a second optical channel between the first port and the second port. The identifier of the first optical channel may be different from an identifier of the second optical channel. Because a phase error caused by the second optical channel on the optical signal may be different from a phase error caused by the first optical channel on the optical signal, the determining apparatus determines the phase compensation coefficient of the first optical channel based on the identifier of the first optical channel. This helps more accurately compensate for the phase error in the signal and further reduce a bit error rate.

A form of the first data is not limited in this application. For example, the first data may be data carried in an electrical signal. In a process in which the optical transmitting device carrying the first data on an optical signal, the optical transmitting device converts the electrical signal carrying the first data into the optical signal. A transmission mode of the first optical signal is not limited in this application. For example, the first optical signal may be a signal in an optical burst mode (or referred to as an optical burst signal). Correspondingly, the CDR in the optical receiving device may be a burst mode clock and data recovery (burst mode clock and data recovery, BCDR).

The system provided in this application may support time division multiplexing, different data transmission requests may correspond to different slots, and the system may occupy the slot corresponding to the data transmission request to transmit corresponding data. As shown in FIG. 5, actual duration for sending the first data in the first slot by the optical transmitting device may be less than duration of the first slot. Correspondingly, actual duration of the first slot indicated by the data transmission request may be less than the duration of the first slot. Similarly, actual duration for receiving the first data in the first slot by the optical receiving device may be less than the duration of the first slot. Correspondingly, the first slot indicated by the configuration information may be a part of a time range in the first slot.

Optionally, the system may compensate for a phase error on an optical receiving device side based on a phase compensation coefficient of an optical channel.

When the optical transmitting device has a requirement for sending data (referred to as first data) to an optical receiving device in a slot (referred to as a first slot), the optical transmitting device may send the data transmission request to the controller. The data transmission request indicates that the optical transmitting device has the requirement for sending the first data to the optical receiving device in the first slot. Correspondingly, the controller may receive the data transmission request. This process may be understood with reference to S301.

For different optical channels, phases of input optical signals, distances of optical links, channel conditions, and the like usually differ greatly. Therefore, in a process of transmitting an optical signal from the optical transmitting device to the optical receiving device, different optical channels cause phase distortion (or phase errors) at different degrees on the optical signal. A phase compensation coefficient configured in the optical receiving device is used to compensate for a phase error in an optical signal. The controller may determine a first optical channel between the optical transmitting device and the optical receiving device in the first slot based on the data transmission request, and then send configuration information to the optical receiving device, to indicate the optical receiving device to receive the first data in the first slot based on a first phase compensation coefficient of the first optical channel. Correspondingly, the optical receiving device may receive the configuration information. After the optical transmitting device inputs the optical signal (referred to as the first optical signal) that carries the first data into the first optical channel in the first slot, the optical receiving device may recover, in the first slot based on the first phase compensation coefficient according to an indication of the configuration information, the first data from the first optical signal that is output by the first optical channel. This helps improve accuracy of data recovery performed by the optical receiving device on the first optical signal, and reduce a bit error rate.

The optical transmitting device may determine, before actually sending the first optical signal, a requirement for sending the first optical signal to the optical receiving device. Therefore, this helps the optical transmitting device send the data transmission request to the controller before the first slot. When another impact factor is not considered, phase errors caused by a same optical channel on an optical signal in different slots are the same, that is, phase compensation coefficients required for an optical signal transmitted to the optical receiving device through a same optical channel in different slots are the same. Therefore, this helps the controller obtain the first phase compensation coefficient of the first optical channel before the first slot. The controller configures, based on the data transmission request and the first phase compensation coefficient of the first optical channel, the optical receiving device to receive the first optical signal, instead of configuring, by detecting a phase of the first optical signal, the optical receiving device to receive the first optical signal. This helps the controller send the configuration information to the optical receiving device before the first slot, and further helps the optical receiving device quickly complete configuration of the phase compensation coefficient when the first slot arrives, thereby reducing a clock recovery delay, and improving data transmission efficiency of optical communication.

Optionally, the controller may determine an identifier of the first optical channel based on the data transmission request, and then determine the first phase compensation coefficient based on the identifier of the first optical channel. Correspondingly, the configuration information may include the first phase compensation coefficient.

Optionally, after determining the identifier of the first optical channel, the controller may carry the identifier of the first optical channel on the configuration information. After receiving the configuration information, the optical receiving device may determine the first phase compensation coefficient based on the identifier of the first optical channel. Correspondingly, the configuration information may not include the first phase compensation coefficient. This helps reduce a length of control information, and save transmission resources of a control channel.

For ease of description, in this application, an apparatus configured to determine the first phase compensation coefficient based on the identifier of the first optical channel is referred to as a determining apparatus, and the determining apparatus may be the controller, the optical receiving device, or another device.

Optionally, the determining apparatus may obtain phase compensation information, where the phase compensation information indicates a correspondence between an identifier of an optical channel in the optical interconnection network and a phase compensation coefficient. After determining the identifier of the first optical channel, the determining apparatus may obtain, from the phase compensation information, a phase compensation coefficient (that is, the first phase compensation coefficient) corresponding to the identifier of the first optical channel.

A manner in which the phase compensation information indicates the correspondence is not limited in this application. For example, the phase compensation information may be a machine learning model or include one or more key-value pairs.

A location for storing the phase compensation information is not limited in this application. For example, the phase compensation information may be stored in the determining apparatus, or stored in an apparatus other than the determining apparatus.

A manner of determining the phase compensation information is not limited in this application.

For example, the determining apparatus or another apparatus may determine the correspondence between the identifier of the first optical channel and the first phase compensation coefficient based on parameter information of the first optical channel. The parameter information of the first optical channel includes but is not limited to a phase of an optical signal sent by the optical transmitting device, a length of an optical fiber that the first optical channel passes through, and/or a channel condition (for example, an attenuation status of a signal phase in a unit length). The parameter information of the first optical channel may be used to measure a phase error caused by the first optical channel.

For example, the determining apparatus or another apparatus may determine the phase compensation information based on a phase of an optical signal that is output by the optical channel in the optical interconnection network in a second slot, and the second slot includes one or more slots before the first slot. For example, the determining apparatus or another apparatus may determine the correspondence between the identifier of the first optical channel and the first phase compensation coefficient based on a phase of an optical signal received by the optical receiving device from the first optical channel in one or more slots before the first slot.

In this application, the phase of the signal received by the optical receiving device may be an absolute value of the phase of the signal or a phase relative value of the signal relative to a target signal. That is, a phase of a second optical signal may be used to measure a phase error caused by the first optical channel on a second optical signal, and therefore may be used to determine the correspondence between the identifier of the first optical channel and the first phase compensation coefficient.

The first phase compensation coefficient may indicate a phase value (referred to as a first phase value) of a signal. The phase value may be an absolute value or a relative value of a phase of the signal.

Optionally, no clock and data recovery (clock and data recovery, CDR) unit (CDR for short) is disposed in the optical receiving device. In a process of recovering, based on the first phase compensation coefficient, the first data from the first optical signal that is output by the first optical channel, the optical receiving device may generate a first clock signal based on the first phase value, and after converting the first optical signal into a first electrical signal, recover the first data from the first electrical signal based on the first clock signal. This helps improve data transmission efficiency of optical communication.

Optionally, a CDR is disposed in the optical receiving device. In a process of recovering, based on the first phase compensation coefficient, the first data from the first optical signal that is output by the first optical channel, the optical receiving device may configure the first phase compensation coefficient for the CDR unit, convert the first optical signal into a first electrical signal, recover a first clock signal from the first electrical signal by using the configured CDR unit, and recover the first data from the first electrical signal based on the first clock signal. This helps improve accuracy of a clock signal used for data recovery. In addition, after the first phase compensation coefficient is configured, the CDR may search, based on the first phase value, for a phase value that matches a phase of the first electrical signal. This helps reduce a delay in recovering a clock signal by the CDR.

For example, the CDR may match the phase of the first electrical signal with a plurality of phase values at the same time. The plurality of phase values may include the first phase value and one or more phase values close to the first phase value. Then, the first clock signal is generated based on a successfully matched phase value. This helps reduce a delay in recovering a clock signal by the CDR.

For example, the CDR matches the phase of the first electrical signal with a plurality of phase values in a time division manner, or sequentially matches the phase of the first electrical signal with phase values in a phase value sequence. This helps reduce a requirement for a maximum sampling frequency supported by the optical receiving device. A 1^{st} phase value in the phase value sequence is the first phase value. This helps reduce a delay in recovering a clock signal by the CDR. Optionally, the phase value sequence is an arithmetic progression, and a difference between two adjacent phase values may be referred to as a phase adjustment step of the CDR. Correspondingly, the CDR uses the first phase value as an initial phase value, and performs scanning according to the step to determine a value of the phase of the first electrical signal.

In a process of matching the phase of the first electrical signal with a phase value, the CDR may generate a sampling clock signal based on the phase value, sample the first electrical signal based on the sampling clock signal, and determine, based on a sampling result, whether the phase of the first electrical signal successfully matches the phase value.

The CDR may not need to recover the first clock signal in the first slot by receiving a preamble. This helps reduce a link establishment delay of the optical receiving device, and improve data transmission efficiency of optical communication. Even if the CDR still recovers the first clock signal by receiving the preamble, because the CDR may recover the first clock signal from the first electrical signal based on the first phase value, a delay in recovering a clock signal by the CDR is reduced, overheads of the preamble are reduced, and data transmission efficiency of optical communication is improved.

The optical interconnection network may provide a plurality of optical channels in a time division manner or at the same time, and the identifier of the first optical channel may be used to determine the first optical channel from the plurality of optical channels in the optical interconnection network. Optionally, at least two optical channels in the plurality of optical channels are separately used to transmit, to the optical receiving device, the optical signal sent by the optical transmitting device. For example, information about the first optical channel may include address information of at least one optical switching device that is included in the first optical channel or through which the first optical channel passes.

It is assumed that at least two optical channels include the first optical channel and a second optical channel, the second optical channel is also used to transmit, to the optical receiving device, an optical signal sent by the optical transmitting device, and the identifier of the first optical channel is different from an identifier of the second optical channel. Because a phase error caused by the second optical channel on the optical signal may be different from a phase error caused by the first optical channel on the optical signal, the determining apparatus determines the phase compensation coefficient based on an identifier of the optical channel. This helps more accurately compensate for the phase error in the signal and further reduce a bit error rate.

Optionally, the optical interconnection network includes one or more optical switching devices, and the controller may further control, based on the data transmission request, the optical interconnection network to generate the first optical channel in the first slot. Correspondingly, the optical signal sent by the optical transmitting device in the first slot reaches the optical receiving device through the first optical channel. In this way, the phase compensation information that is in the first slot and that is indicated by the configuration information is more accurately used to compensate for a phase error in the optical signal received by the optical receiving device in the first slot, thereby reducing a bit error rate.

A process in which the system compensates for a phase error on an optical receiving device side may be understood with reference to a process in which the system compensates for a phase error on the optical transmitting device side. For example, the data transmission request, the phase compensation coefficient, the phase compensation information, and the like may be understood with reference to related content in the example corresponding to FIG. 3.

A system and a method run on the system are described above. To better implement the foregoing method in this application, the following provides a related apparatus or device configured to implement the foregoing method.

This application provides a controller. The controller may perform any method procedure performed by the foregoing controller. An implementation of the controller is not limited in this application.

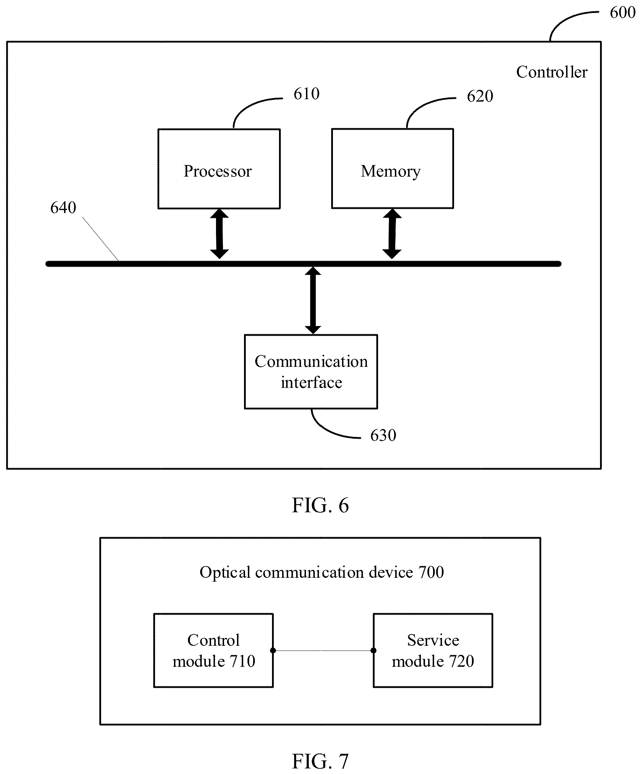

Optionally, refer to FIG. 6. The controller 600 may include a processor 610, a memory 620, and a communication interface 630. The processor 610 and the memory 620 are connected to each other.

The processor 610 may include one or more general-purpose processors, for example, a central processing unit (central processing unit, CPU), or a combination of a CPU and a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), generic array logic (generic array logic, GAL), or any combination thereof.

The memory 620 may include a volatile memory (volatile memory), for example, a random access memory (random access memory, RAM). The memory 620 may also include a non-volatile memory (non-volatile memory), for example, a read-only memory (read-only memory, ROM), a flash memory (flash memory), a hard disk drive (hard disk drive, HDD), or a solid-state drive (solid-state drive, SSD). The memory 620 may further include a combination of the foregoing types.

The memory 620 stores computer instructions. By executing these computer instructions, the processor 610 can perform the steps performed by the controller described above, for example, perform one or more of S301, S302, and S305.

The communication interface 630 is a wired interface, and is configured to connect to a wired link such as a cable or an optical fiber. Alternatively, optionally, the communication interface 630 is a wireless interface. The processor 610 may be connected to the communication interface 630, to communicate with another device through the communication interface 630. For example, through the communication interface 630, the processor 610 may receive a data transmission request from an optical transmitting device, send configuration information to an optical receiving device, and control an optical interconnection network to generate a first optical channel.

Optionally, the processor 610, the memory 620, and the communication interface 630 may be connected to each other by using a bus 640. The bus 640 may be a peripheral component interconnect (peripheral component interconnect, PCI) bus, an extended industry standard architecture (extended industry standard architecture, EISA) bus, or the like. The bus 640 may be classified into an address bus, a data bus, a control bus, or the like. For ease of representation, only one bold line is used for representation in FIG. 6, but this does not mean that there is only one bus or only one type of bus.

In FIG. 6, an example in which the processor 610 and the memory 620 are integrated into the controller 600 is used. Optionally, the controller 600 does not include the memory 620, and the memory 620 is disposed outside the controller 600.

Optionally, the controller may include a receiving module and a sending module. The receiving module is configured to perform S301, and the sending module is configured to perform S302. Optionally, the sending module is further configured to perform S305. Implementations of the receiving module and the sending module are not limited in this application, and the receiving module and the sending module may be implemented in a form of hardware, or may be implemented in a form of a software functional unit, or may be implemented in a combination of software and hardware.

Optionally, the controller is a chip, and the chip includes one or more processors. Some or all processors are configured to read and execute a computer program stored in the memory, to perform any method procedure performed by the foregoing controller. The chip may further include an electrical communication component, and the electrical communication component may be, for example, an input/output interface, a pin, or a circuit. Optionally, the memory may be a storage unit in the chip, for example, a register or a cache. The memory may alternatively be a storage unit located outside the chip, for example, a read-only memory (read-only memory, ROM), an EEPROM, another type of static storage device that can store static information and instructions, or a random access memory (random access memory, RAM).

For a method procedure performed by the controller and an effect, refer to related content of the corresponding method. Details are not described herein again.

This application provides an optical communication device. The optical communication device may be the optical transmitting device described above, and is configured to perform the method performed by the optical transmitting device. An implementation of the optical communication device is not limited in this application. Optionally, the optical communication device may be shown in FIG. 4-1. Alternatively, optionally, refer to FIG. 7. The optical communication device 700 may include a control module 710 and a service module 720. The control module 710 is configured to perform S301 and S302, and the service module 720 is configured to perform S303. Optionally, the control module 710 is further configured to perform S3031 and S3032, and the service module 720 is specifically configured to perform S3033 and S3034.

The control module 710 may be the control module shown in FIG. 4-1, and the control module may be a processor or a multipoint control unit (Multipoint control unit, MCU). The service module 720 may include the optical transmitter, the encoder, and the clock module shown in FIG. 4-1.

Optionally, the optical communication device may include an optical interface and a transmitting device, and the optical interface may be an onboard optical interface or a pluggable optical interface in the transmitting device. The control module may be deployed in the optical interface and/or the transmitting device, the optical transmitter may be deployed in the optical interface, the encoder may be deployed in a receiving device, and the clock module may be deployed in the optical interface and/or the transmitting device.

Optionally, the optical communication device may be an optical interface, and the optical interface is configured to connect to the foregoing receiving device.

This application further provides a transmitting device. The transmitting device includes a control module and a service module, and the service module is configured to connect to an optical module (or the foregoing optical interface). The optical module may include an optical transmitter. The optical transmitter is configured to convert a received electrical signal into an optical signal, for example, configured to perform S3034. The control module may be configured to perform S301 and S302, and may be further configured to perform S3031. The service module may be configured to perform S3032 and S3033.

This application provides a system. The system may be all or some devices in the system described above, for example, include an optical transmitting device and an optical receiving device, or include an optical transmitting device and a controller, or include an optical receiving device and a controller, or include a controller and an optical interconnection network, or include a controller, an optical transmitting device, and an optical receiving device, or include an optical interconnection network, a controller, an optical transmitting device, and an optical receiving device.

Division into the modules or units described in FIG. 6 or FIG. 7 is merely an example, and is merely logical function division. There may be other division manners during actual implementation. For example, a plurality of modules or units may be combined or integrated into another system, or some features may be ignored or not performed.

This application further provides a computer-readable storage medium. The computer-readable storage medium stores a computer program. When the computer program is executed by a processor, some or all of the steps recorded in any one of the foregoing method examples may be implemented. The computer-readable storage medium may be any usable medium accessible to a general-purpose or dedicated computer. An example of the present invention further provides a computer program. The computer program includes instructions. When the computer program is executed by a computer, the computer is enabled to perform some or all steps in any method example. Persons of ordinary skill in the art may understand that the computer-readable storage medium includes any non-transitory (non-transitory) machine-readable medium that can store program code, for example, a USB flash drive, a removable hard disk, a magnetic disk, an optical disc, a RAM, an SSD, or a non-volatile memory (non-volatile memory).

The apparatuses provided in examples of this application may be configured to perform the foregoing corresponding example methods. Therefore, for technical effects that can be achieved by the apparatus examples in this application, refer to the technical effects achieved by the foregoing corresponding method examples. Details are not described herein again.

It may be clearly understood by persons skilled in the art that, for the purpose of convenient and brief description, for a detailed working process of the foregoing described system, apparatus, and unit, refer to a corresponding process in the foregoing method examples. Details are not described herein again. "A and/or B" in examples of this application may be understood as including two solutions: "A and B" and "A or B". In the specification, claims, and accompanying drawings of this application, terms "first", "second", and the like are intended to distinguish between similar objects but do not necessarily indicate a specific order or sequence. It should be understood that the terms used in such a way are interchangeable in proper circumstances. This is merely a differentiation manner that is used when objects having a same attribute are described in examples of this application.

In the several examples provided in this application, it should be understood that the disclosed module, apparatus, or device may be implemented in other manners. For example, the described apparatus examples are merely examples. For example, division into the units is merely logical function division. There may be other division manners during actual implementation. For example, a plurality of units or components may be combined or integrated into another system, or some features may be ignored or not performed. In addition, the displayed or discussed mutual couplings or direct couplings or communication connections may be implemented through some interfaces, and indirect couplings or communication connections between apparatuses or units may be implemented in an electrical or another form.

Finally, it should be noted that the foregoing embodiments are merely used to describe the technical solutions of the present invention, but not limit the technical solutions of the present invention. Although the present invention is described in detail with reference to the foregoing embodiments, persons of ordinary skill in the art should understand that they may still modify the technical solutions described in the foregoing embodiments, or perform equivalent replacement on some technical features thereof. However, these modifications or replacements do not make the essence of the corresponding technical solutions depart from the protection scope of the technical solutions in embodiments of the present invention.

## Claims

1. A method, comprising:
sending, by an optical transmitting device, a data transmission request to a controller, wherein the data transmission request indicates that the optical transmitting device has a requirement for sending first data to an optical receiving device in a first slot;
sending, by the controller, configuration information to the optical transmitting device based on the data transmission request, wherein the configuration information indicates the optical transmitting device to send the first data in the first slot based on a first phase compensation coefficient of a first optical channel in an optical interconnection network, and the first optical channel is used to transmit, to the optical receiving device in the first slot, an optical signal sent by the optical transmitting device;
carrying, by the optical transmitting device, the first data on a first optical signal in the first slot based on the first phase compensation coefficient according to an indication of the configuration information, and then inputting the first optical signal on which phase compensation is performed into the first optical channel; and
recovering, by the optical receiving device in the first slot, the first data from the first optical signal that is output by the first optical channel.

2. The method according to claim 1, wherein the first phase compensation coefficient is a phase compensation coefficient that corresponds to an identifier of the first optical channel and that is obtained from phase compensation information, and the phase compensation information indicates a correspondence between an identifier of an optical channel in the optical interconnection network and a phase compensation coefficient.

3. The method according to claim 2, wherein the phase compensation information is determined based on a phase measurement result of an optical signal that is output by the optical channel in the optical interconnection network in a second slot, and the second slot comprises one or more slots before the first slot.

4. The method according to claim 3, wherein the phase compensation coefficient that corresponds to the identifier of the first optical channel and that is indicated by the phase compensation information is a phase compensation coefficient in a plurality of phase compensation coefficients that matches a first phase measurement result, and the first phase measurement result is a phase measurement result of an optical signal that is output by the first optical channel in the second slot.

5. The method according to any one of claims 2 to 4, wherein the identifier of the first optical channel is used to determine the first optical channel from a plurality of optical channels in the optical interconnection network, and at least two optical channels in the plurality of optical channels are separately used to transmit, to the optical receiving device, the optical signal sent by the optical transmitting device.

6. The method according to any one of claims 1 to 5, wherein carrying, by the optical transmitting device, the first data on the first optical signal based on the first phase compensation coefficient comprises:
generating, by the optical transmitting device, a first clock signal based on a phase value indicated by the first phase compensation coefficient;
carrying, by the optical transmitting device, the first data on a first electrical signal based on the first clock signal; and
converting, by the optical transmitting device, the first electrical signal into the first optical signal.

7. The method according to any one of claims 1 to 6, wherein the optical interconnection network comprises one or more optical switching devices, and the method further comprises:
controlling, by the controller based on the data transmission request, the optical interconnection network to generate the first optical channel in the first slot.

8. A system, wherein the system comprises a plurality of optical communication devices and a controller, and the plurality of optical communication devices comprise an optical transmitting device and an optical receiving device;
the optical transmitting device is configured to send a data transmission request to the controller, wherein the data transmission request indicates that the optical transmitting device has a requirement for sending first data to the optical receiving device in a first slot;
the controller is configured to send configuration information to the optical transmitting device based on the data transmission request, wherein the configuration information indicates the optical transmitting device to send the first data in the first slot based on a first phase compensation coefficient of a first optical channel in an optical interconnection network, and the first optical channel is used to transmit, to the optical receiving device in the first slot, an optical signal sent by the optical transmitting device;
the optical transmitting device is configured to carry the first data on a first optical signal in the first slot based on the first phase compensation coefficient according to an indication of the configuration information, and then input the first optical signal on which phase compensation is performed into the first optical channel; and
the optical receiving device is configured to recover, in the first slot, the first data from the first optical signal that is output by the first optical channel.

9. A method, comprising:
receiving a data transmission request from an optical transmitting device, wherein the data transmission request indicates that the optical transmitting device has a requirement for sending first data to an optical receiving device in a first slot; and
sending configuration information to the optical transmitting device based on the data transmission request, wherein the configuration information indicates the optical transmitting device to send the first data in the first slot based on a first phase compensation coefficient of a first optical channel in an optical interconnection network, and the first optical channel is used to transmit, to the optical receiving device in the first slot, an optical signal sent by the optical transmitting device.

10. The method according to claim 9, wherein the first phase compensation coefficient is a phase compensation coefficient that corresponds to an identifier of the first optical channel and that is obtained from phase compensation information, and the phase compensation information indicates a correspondence between an identifier of an optical channel in the optical interconnection network and a phase compensation coefficient.

11. The method according to claim 10, wherein the phase compensation information is determined based on a phase measurement result of an optical signal that is output by the optical channel in the optical interconnection network in a second slot, and the second slot comprises one or more slots before the first slot.

12. The method according to claim 11, wherein the phase compensation coefficient that corresponds to the identifier of the first optical channel and that is indicated by the phase compensation information is a phase compensation coefficient in a plurality of phase compensation coefficients that matches a first phase measurement result, and the first phase measurement result is a phase measurement result of an optical signal that is output by the first optical channel in the second slot.

13. The method according to any one of claims 10 to 12, wherein the identifier of the first optical channel is used to determine the first optical channel from a plurality of optical channels in the optical interconnection network, and at least two optical channels in the plurality of optical channels are separately used to transmit, to the optical receiving device, the optical signal sent by the optical transmitting device.

14. The method according to any one of claims 9 to 13, wherein the optical interconnection network comprises one or more optical switching devices, and the method further comprises:
controlling, based on the data transmission request, the optical interconnection network to generate the first optical channel in the first slot.

15. A controller, comprising a processor and a memory, wherein the processor is configured to execute computer instructions stored in the memory, to perform the method according to any one of claims 9 to 14.

16. A method, comprising:
sending a data transmission request to a controller, wherein the data transmission request indicates that an optical transmitting device has a requirement for sending first data to an optical receiving device in a first slot;
receiving configuration information from the controller, wherein the configuration information indicates the optical transmitting device to send the first data in the first slot based on a first phase compensation coefficient of a first optical channel in an optical interconnection network, and the first optical channel is used to transmit, to the optical receiving device in the first slot, an optical signal sent by the optical transmitting device; and
carrying the first data on a first optical signal in the first slot based on the first phase compensation coefficient according to an indication of the configuration information, and then inputting the first optical signal on which phase compensation is performed into the first optical channel.

17. The method according to claim 16, wherein the first phase compensation coefficient is a phase compensation coefficient that corresponds to an identifier of the first optical channel and that is obtained from phase compensation information, and the phase compensation information indicates a correspondence between an identifier of an optical channel in the optical interconnection network and a phase compensation coefficient.

18. The method according to claim 17, wherein the phase compensation information is determined based on a phase of an optical signal that is output by the optical channel in the optical interconnection network in a second slot, and the second slot comprises one or more slots before the first slot.

19. The method according to claim 17 or 18, wherein the identifier of the first optical channel is used to determine the first optical channel from a plurality of optical channels in the optical interconnection network, and at least two optical channels in the plurality of optical channels are separately used to transmit, to the optical receiving device, the optical signal sent by the optical transmitting device.

20. The method according to any one of claims 16 to 19, wherein carrying the first data on the first optical signal based on the first phase compensation coefficient comprises:
generating a first clock signal based on a phase value indicated by the first phase compensation coefficient;
carrying the first data on a first electrical signal based on the first clock signal; and
converting the first electrical signal into the first optical signal.

21. An optical transmitting device, wherein the optical transmitting device comprises a control module and a service module;
the control module is configured to send a data transmission request to a controller, wherein the data transmission request indicates that the optical transmitting device has a requirement for sending first data to an optical receiving device in a first slot;
the control module is further configured to receive configuration information from the controller, wherein the configuration information indicates the optical transmitting device to send the first data in the first slot based on a first phase compensation coefficient of a first optical channel in an optical interconnection network, and the first optical channel is used to transmit, to the optical receiving device in the first slot, an optical signal sent by the optical transmitting device;
the control module is further configured to configure the first phase compensation coefficient for the service module in the first slot based on an indication of the configuration information; and
the service module is configured to carry the first data on a first optical signal in the first slot based on the first phase compensation coefficient, and then input the first optical signal on which phase compensation is performed into the first optical channel.

22. A transmitting device, wherein the transmitting device comprises a control module and a service module, the service module is configured to connect to an optical module, and the optical module is configured to convert an input electrical signal into an optical signal;
the control module is configured to send a data transmission request to a controller, wherein the data transmission request indicates that the optical transmitting device has a requirement for sending first data to an optical receiving device in a first slot;
the control module is further configured to receive configuration information from the controller, wherein the configuration information indicates the optical transmitting device to send the first data in the first slot based on a first phase compensation coefficient of a first optical channel in an optical interconnection network, and the first optical channel is used to transmit, to the optical receiving device in the first slot, an optical signal sent by the optical transmitting device;
the control module is further configured to configure the first phase compensation coefficient for the service module in the first slot based on an indication of the configuration information; and
the service module is configured to carry the first data on a first optical signal in the first slot based on the first phase compensation coefficient, and then input the first electrical signal on which phase compensation is performed into the optical module.
